# EUROPEAN PATENT SPECIFICATION

(11) **EP 4 120 648 B1**
(45) Date of publication and mention of the grant of the patent: **29.04.2026**
(21) Application number: 21809545.3
(22) Date of filing: 20.04.2021
(51) Int. Cl.: H04L 51/04, H04L 51/046, H04L 51/10, H04L 51/18, G06T 13/40, G06T 13/80, H04L 51/216, H04L 51/52

(54) **MESSAGE SENDING METHOD AND APPARATUS, MESSAGE RECEIVING METHOD AND APPARATUS, AND DEVICE AND MEDIUM**
VERFAHREN UND VORRICHTUNG ZUM SENDEN VON NACHRICHTEN, VERFAHREN UND VORRICHTUNG ZUM EMPFANGEN VON NACHRICHTEN SOWIE VORRICHTUNG UND MEDIUM
PROCÉDÉ ET APPAREIL D'ENVOI DE MESSAGES, PROCÉDÉ ET APPAREIL DE RÉCEPTION DE MESSAGES, DISPOSITIF ET SUPPORT

(30) Priority: 20.05.2020 CN 202010432596
(43) Date of publication of application: 18.01.2023
(73) Proprietor: Tencent Technology (Shenzhen) Company Limited, Shenzhen, Guangdong, 518057 (CN)
(72) Inventor: CAI, Bohan, Shenzhen, Guangdong 518057 (CN); YAN, Xi, Shenzhen, Guangdong 518057 (CN); TANG, Xucheng, Shenzhen, Guangdong 518057 (CN); CHEN, Zhihao, Shenzhen, Guangdong 518057 (CN); JIN, Qiuchen, Shenzhen, Guangdong 518057 (CN); HUANG, Runjia, Shenzhen, Guangdong 518057 (CN); HUANG, Qing, Shenzhen, Guangdong 518057 (CN); LIANG, Junjie, Shenzhen, Guangdong 518057 (CN); XU, Genxi, Shenzhen, Guangdong 518057 (CN); QIU, Hongfa, Shenzhen, Guangdong 518057 (CN); LIU, Yanlan, Shenzhen, Guangdong 518057 (CN); ZHOU, Wancheng, Shenzhen, Guangdong 518057 (CN); FENG, Jingqiong, Shenzhen, Guangdong 518057 (CN)
(74) Representative: Novagraaf International SA
(86) International application number: PCT/CN2021/088392
(87) International publication number: WO 2021/233038

(56) References cited:
- CN-A- 109 412 934
- CN-A- 109 993 821
- US-A1- 2012 270 578
- US-A1- 2014 351 720
- US-A1- 2016 259 526
- US-A1- 2019 018 577
- US-A1- 2019 164 327
- US-A1- 2019 392 394

## Description

This application claims priority to Chinese Patent Application No. 202010432596.8 filed on May 20, 2020 and titled "MESSAGE TRANSMITTING METHOD AND APPARATUS, MESSAGE RECEIVING METHOD AND APPARATUS, DEVICE, AND MEDIUM".

### FIELD

Embodiments of the present disclosure relate to the field of instant messaging, and in particular to a message transmitting method and apparatus, a message receiving method and apparatus, a device, and a medium.

### BACKGROUND

An instant messaging program supports a private chat function and a group chat function. The private chat function refers to conducting a chat between two user accounts. The group chat function refers to conducting a chat among multiple user accounts.
According to US2016/259526A1, a display method of a scenario emoticon using an instant message service is provided. The display method includes displaying a scenario emoticon selection region showing at least one thumbnail image of at least one scenario emoticon; receiving an input of a selection upon one from the at least one thumbnail image; and displaying, in response to the selection, a scenario emoticon on a display region within a chat window where an instant message is output. When the play file is played, the at least one object is displayed according to a preset scenario, if a user interaction upon the object is input while the play file is played, a status of the object is changed in response to the user interaction.
According to US2012/270578A1, a system and method are described herein that allow computing device users to convey emotional expressions graphically to other computing device users during a text messaging session. During the text messaging session, users run a text messaging application on their respective computing devices, each storing in memory a library of graphical expressions. A sender transmits a graphical expression by triggering a sensor which causes an expression command to be sent to the recipient. The expression command identifies for the application running on the recipient's computing device the graphical expression to retrieve from the memory of the recipient's computing device. The graphical expression is then displayed on the recipient's computing device using avatars that represent the sender and the recipient.
According to US2014/351720A1, a method and an apparatus for exchanging interactive information between communicating parties are provided. A sending user acts upon an avatar of the receiving user displayed on the sending user's terminal. The sending user's terminal monitors the acts, determines a playable message according to the detected interactive touch behavior, and plays the playable message on the sending user's terminal. The sending user's terminal sends related information to allow the receiving user's terminal to determine a second playable message in reaction to the touch behavior of the sending user. Both playable messages are related to the avatar and have a correspondence with the interactive touch behavior of the sending user in order to mimic a real life physical interaction between the two communicating parties.

Document US 2019/392394 A1 discloses a method for customizing or personalizing auditory, visual and vibratory alerts associated with user communications.

### SUMMARY

The invention is described according to a message transmitting method as claimed in independent claim 1, a message receiving method as claimed in independent claim 10 and and a computer device as claimed in independent claim 14. Additional aspects of the invention are to be found in the dependent claims.

According to an aspect of the present disclosure, a message transmitting method applicable to a first client is provided. The first client is logged with a first user account, and the method includes:
displaying a first chat interface, where avatars of at least two user accounts are displayed in the first chat interface, and the at least two user accounts include the first user account and a second user account;
generating an interaction message in response to an interaction with the avatar of the second user account; and
transmitting the interaction message to the second user account, where the interaction message is configured to trigger displaying of an animation of the avatar of the second user account in a second chat interface by a second client, and the second client is logged with the second user account.

According to another aspect of the present disclosure, a message receiving method applicable to a second client is provided. The second client is logged with a second user account, and the method includes:
displaying a second chat interface, where avatars of at least two user accounts are displayed in the second chat interface, and the at least two user accounts include a first user account and the second user account;
receiving an interaction message transmitted by the first user account to the second user account; and
displaying the interaction message in the second chat interface, and displaying an animation of the avatar of the second user account in the second chat interface.

In some embodiments, the interaction message and a system message are displayed in different manners.

In some embodiments, the message content of the interaction message includes a name of the first user account, a name of the second user account, and a description of an action performed on the second user account by the first user account.

According to another aspect of the present disclosure, a message transmitting apparatus is provided. The apparatus is logged with a first user account. The apparatus includes:
a display module, configured to display a first chat interface, where avatars of at least two user accounts are displayed in the first chat interface, and the at least two user accounts include the first user account and a second user account;
a generation module, configured to generate an interaction message in response to an interaction with the avatar of the second user account; and
a transmitting module, configured to transmit the interaction message to the second user account, where the interaction message is configured to trigger displaying of an animation of the avatar of the second user account in a second chat interface by a second client, and the second client is logged with the second user account.

In some embodiments, the generation module is configured to generate the interaction message in response to a double-click operation on the avatar of the second user account.

According to the invention, the display module is configured to display the animation of the avatar of the second user account in the first chat interface in response to the interaction with the avatar of the second user account.

In some embodiments, multiple avatars of the second user account are displayed in the first chat interface. The display module is configured to display an animation of at least one of the multiple avatars of the second user account in an avatar area, in response to the double-click operation on the avatar.

In some embodiments, the display module is configured to display the interaction message in the first chat interface.

In some embodiments, the display module is configured to display message content of the interaction message in the first chat interface. The interaction message and a chat message are displayed in different manners.

In some embodiments, the interaction message and a system message are displayed in different manners.

In some embodiments, the display module is configured to scroll to a last message in the first chat interface automatically in response to displayed content in the first chat interface not including the last message. The last message includes the message content of the interaction message.

In some embodiments, the message content includes a name of the first user account, a name of the second user account, and a description of an action performed on the second user account by the first user account.

The names include at least one of a remark name, a group nickname, and a customized nickname.

In some embodiments, the description of the action includes at least one of: touch, tap, hammer, hit, kick, slash, or kiss.

In some embodiments, the display module is configured to: display an attribute page of the first user account in response to a first interaction with the name of the first user account; or display an attribute page of the second user account in response to a second interaction with the name of the second user account.

In some embodiments, the display module is configured to: display at least one of n consecutive interaction messages in a collapsed form in response to the n interaction messages existing in the first chat interface and the n interaction messages being in a read state; or display at least one of m consecutive interaction messages in a collapsed form in response to the m interaction messages existing in the first chat interface and the m interaction messages being prior to a last non-interaction message, m being an integer greater than 1, and the non-interaction message being a message other than the m interaction messages.

According to another aspect of the present disclosure, a message receiving apparatus is provided. The apparatus is logged with a second user account. The apparatus includes:
a display module, configured to display a second chat interface, where avatars of at least two user accounts are displayed in the second chat interface, and the at least two user accounts include a first user account and the second user account; and
a receiving module, configured to receive an interaction message transmitted by the first user account to the second user account.

The display module is configured to display the interaction message in the second chat interface, and display an animation of the avatar of the second user account in the second chat interface.

In some embodiments, the display module is configured to display message content of the interaction message in the second chat interface. The interaction message and a chat message are displayed in different manners.

In some embodiments, the display module is configured to display the animation of the avatar of the second user account in an avatar area corresponding to a chat message transmitted by the second user account and being closest to the interaction message.

In some embodiments, the display module is configured to: display at least one of n consecutive interaction messages in a collapsed form in response to the n interaction messages existing in the second chat interface and the n interaction messages being in a read state; or display at least one of m consecutive interaction messages in a collapsed form in response to the m interaction messages existing in the second chat interface and the m interaction messages being prior to a last non-interaction message.

According to another aspect of the present disclosure, a computer device including a processor and a memory is provided. The memory stores at least one instruction, at least one program, a code set, or an instruction set. The at least one instruction, the at least one program, the code set, or the instruction set is loaded and executed by the processor to implement the message transmitting method or the message receiving method described in the above aspects.

According to another aspect of the present disclosure, a computer-readable storage medium is provided. The computer-readable storage medium stores at least one instruction, at least one program, a code set, or an instruction set. The at least one instruction, the at least one program, the code set, or the instruction set is loaded and executed by a processor to implement the message transmitting method or the message receiving method described in the above aspects.

The technical solutions provided in the embodiments of the present disclosure generate at least the following beneficial effects.

The interaction message is transmitted to the second user account in response to the interaction with the avatar of the second user account. The interaction message is configured to trigger displaying of the animation of the avatar of the second user account in the second chat interface by the second client. Therefore, a new interaction mode having a mild reminder function is provided. The new interaction mode is applicable to interesting interaction in chat scenarios having relaxed and pleasant atmosphere. In addition, a user can interact with other user accounts merely by interacting with the avatar, thereby reducing redundant human-computer interaction operations, simplifying an operation process, and thus improving operation efficiency and interaction efficiency.

### BRIEF DESCRIPTION OF THE DRAWINGS

To describe the technical solutions in the embodiments of the present disclosure clearer, the accompanying drawings required for describing the embodiments are briefly described hereinafter. Apparently, the accompanying drawings in the following descriptions show merely some embodiments of the present disclosure, and a person of ordinary skill in the art may obtain other accompanying drawings according to these accompanying drawings without creative efforts.
FIG. 1 is a structural block diagram of a computer system according to an exemplary embodiment of the present disclosure.
FIG. 2 is a schematic diagram of an interface of an interaction message according to an exemplary embodiment of the present disclosure.
FIG. 3 is a method flowchart of a message transmitting method according to another exemplary embodiment of the present disclosure.
FIG. 4 is a method flowchart of a message receiving method according to another exemplary embodiment of the present disclosure.
FIG. 5 is a method flowchart of a message transmitting/receiving method according to another exemplary embodiment of the present disclosure.
FIG. 6 is a schematic diagram of an interface of the message transmitting/receiving method according to another exemplary embodiment of the present disclosure.
FIG. 7 is a schematic diagram of an interface of the message transmitting/receiving method according to another exemplary embodiment of the present disclosure.
FIG. 8 is a schematic diagram of an interface of the message transmitting/receiving method according to another exemplary embodiment of the present disclosure.
FIG. 9 is a flowchart of a message transmitting/receiving method according to another exemplary embodiment of the present disclosure.
FIG. 10 is a schematic diagram of an interface of a character attribute page according to another exemplary embodiment of the present disclosure.
FIG. 11 is a flowchart of a message transmitting/receiving method according to another exemplary embodiment of the present disclosure.
FIG. 12 is a schematic diagram of an interface of a read collapsing policy according to another exemplary embodiment of the present disclosure.
FIG. 13 is a schematic diagram of an interface of an interruption collapsing policy according to another exemplary embodiment of the present disclosure.
FIG. 14 is a block diagram of a message transmitting apparatus according to another exemplary embodiment of the present disclosure.
FIG. 15 is a block diagram of a message receiving apparatus according to another exemplary embodiment of the present disclosure.
FIG. 16 is a block diagram of a terminal according to another exemplary embodiment of the present disclosure.

### DETAILED DESCRIPTION OF EMBODIMENTS

To make objectives, technical solutions, and advantages of the present disclosure clearer, implementations of the present disclosure are described in detail with reference to the accompanying drawings.

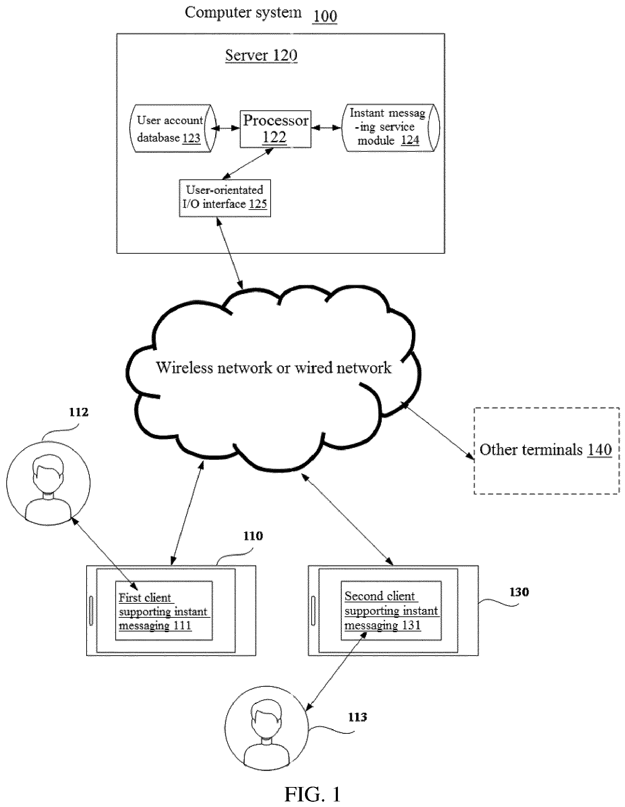

FIG. 1 is a structural block diagram of a computer system according to an exemplary embodiment of the present disclosure. The computer system 100 includes a first terminal 110, a server 120, and a second terminal 130.

A first client 111 supporting instant messaging is installed and run on the first terminal 110. In an embodiment, the first client 111 is an application or a webpage client having an instant messaging function. When the first terminal 110 runs the first client 111, a user interface (UI) of the first client 111 is displayed on a screen of the first terminal 110. In an embodiment, the application is any one of an instant messaging application, a microblog application, a voice communication application, a conference application, a network community application, a payment application, a shopping application, a friend-making application, or a match-making application. In the embodiment of the present disclosure, the application is the instant messaging application, as an example. The first terminal 110 is a terminal used by a first user 112. The first client 111 is logged with a first user account of the first user 112.

A second client 131 supporting instant messaging is installed and run on the second terminal 130. In an embodiment, the second client 131 is an application or a webpage client having an instant messaging function. When the second terminal 130 runs the second client 131, a UI of the second client 131 is displayed on a screen of the second terminal 130. In an embodiment, the application is any one of an instant messaging application, a microblog application, a voice communication application, a conference application, a network community application, a payment application, a shopping application, a friend-making application, a match-making application, or a game application. In the embodiment of the present disclosure, the application is the instant messaging application, as an example. The second terminal 130 is a terminal used by a second user 132. The second client 131 is logged with a second user account of the second user 132.

In an embodiment, the application installed on the first terminal 110 is same as the application installed on the second terminal 130, or the applications installed on the two terminals are applications of a same type running on different operating system platforms (such as Android or IOS). For example, the application is the game program. The first user account is used to control a first virtual character. The second user account is used to control a second virtual character. The first virtual character and the second virtual character are in a same virtual environment. In an embodiment, the first virtual character and the second virtual character may belong to a same camp, a same team, a same organization, a same lobby, or a same channel, or have a friend relationship. In an embodiment, the first virtual character and the second virtual character have a temporary communication permission. In an embodiment, the first virtual character and the second virtual character may belong to different camps, different teams, different organizations, different lobbies, or different channels, or have a hostile relationship.

In an embodiment, the application installed on the first terminal 110 is same as the application installed on the second terminal 130, or the applications installed on the two terminals are applications of a same type running on different operating system platforms (such as Android or IOS). The first terminal 110 is one of multiple terminals, and the second terminal 130 is another of the multiple terminals. In this embodiment, only the first terminal 110 and the second terminal 130 are used as an example for description. Device types of the first terminal 110 and the second terminal 130 are the same or different. The device types include at least one of a smartphone, a tablet computer, an e-book reader, an MP3 player, an MP4 player, a laptop portable computer, or a desktop computer.

FIG. 1 shows only two terminals. In an embodiment, multiple other terminals 140 are provided and may be connected to the server 120. In an embodiment, one or more terminals 140 corresponding to a developer are provided. A development and editing platform of a client supporting instant messaging is installed on the terminal 140. The developer may edit and update the client on the terminal 140, and transmit an installation package of the updated client to the server 120 over a wired or wireless network. The first terminal 110 and the second terminal 130 may download the application installation package from the server 120 to update the clients.

The first terminal 110, the second terminal 130, and the other terminals 140 are connected to the server 120 over the wired or wireless network.

The server 120 may be one server, multiple servers, a cloud computing platform, or a virtualization center. The server 120 is configured to provide a background service for a client supporting three-dimensional instant messaging. In an embodiment, the server 120 is configured to perform primary computing, and the terminals are configured to perform secondary computing. In an embodiment, the server 120 is configured to perform the secondary computing, and the terminals are configured to perform the primary computing. In an embodiment, the server 120 and the terminal perform collaborative computing based on a distributed computing architecture.

In an exemplary example, the server 120 includes a processor 122, a user account database (DB) 123, an instant messaging service module 124, and a user-oriented input/output interface (I/O interface) 125. The processor 122 is configured to load an instruction stored in the server 121 to process data in the user account DB 123 and the instant messaging service module 124. The user account DB 123 is configured to store data of user accounts used by the first terminal 110, the second terminal 130, and the other terminals 140, for example, avatars of the user accounts, nicknames of the user accounts, and groups where the user accounts are located. The instant messaging service module 124 is configured to provide multiple chat rooms (two-person chat or multi-person chat) for the user to perform instant messaging such as chatting, transmitting emoji, and creating red envelopes. The user-oriented I/O interface 125 is configured to establish communication with the first terminal 110 over the wireless network or the wired network to exchange data, or establish communication with the second terminal 130 to exchange data.

A message transmitting (or receiving) method in the embodiments of the present disclosure is described with reference to the above implementation environment. The method is performed by the client run on the terminal shown in FIG. 1, for example. The client is run on the terminal. The client is an application supporting instant messaging.

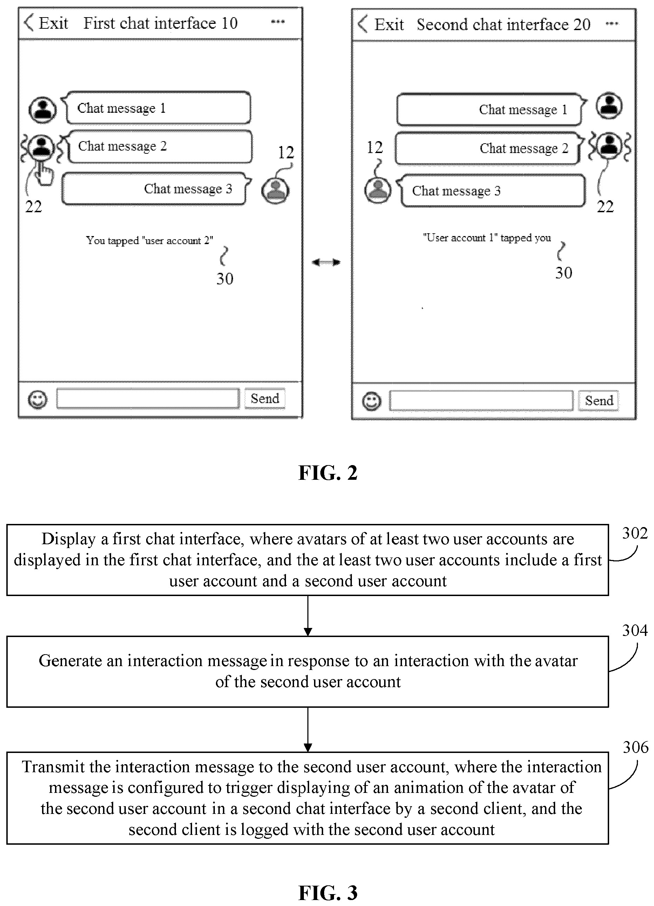

FIG. 2 shows a first chat interface 10 of the first client 111 and a second chat interface 20 of the second client 131. The first client 111 is logged with the first user account, and the second client 131 is logged with the second user account. The first user account and the second user account are configured to transmit and receive chat messages during the two-person chat or the multi-person chat. An avatar 12 and chat messages of the first user account and an avatar 22 and chat messages of the second user account are displayed on the first chat interface 10 and the second chat interface 20.

When a first user performs a double click operation on the avatar 22 of the second user account, an animation of the avatar 22 of the second user account is displayed. Meanwhile, an interaction message 30 is displayed in the first chat interface 10 and the second chat interface 20. The interaction message 30 is different from the chat message. In an embodiment, message content of the interaction message 30 is customized by the client. In the first chat interface 10, content of the interaction message 30 is: you tapped "user account 2". The user account 2 is a name of the second user account. In the second chat interface 20, content of the interaction message 30 is: "user account 1" tapped you. The "user account 1" is a name of the first user account.

FIG. 3 is a flowchart of a message transmitting method according to an exemplary embodiment of the present disclosure. In the embodiment of the present disclosure, the method is performed by the first client shown in FIG. 1, for example. The first client is logged with a first user account. The method includes the following steps 302 to 306.

In step 302, a first chat interface is displayed. Avatars of at least two user accounts are displayed in the first chat interface, and the at least two user accounts include a first user account and a second user account.

The first chat interface is a two-person chat interface or a multi-person chat interface. A list of chat messages ranked according to time is displayed in the first chat interface. In each chat message in the chat message list, an avatar of a user account as a transmitter and content of the chat message are displayed. In an embodiment, a remark name, a group nickname, or a customized nickname of the user account is displayed in each chat message. The remark name is a name remarked for a current user account by another user account. The group nickname is a nickname customized by the current user account in a group. The customized nickname is a nickname customized by the current user account in the client.

For example, the first chat interface is a multi-person group chat interface. The group includes at least two user accounts. The at least two user accounts include the first user account, the second user account, and other user accounts.

In step 304, an interaction message is generated in response to an interaction with the avatar of the second user account.

The first user performs a trigger operation on the avatar of the second user account. The trigger operation includes at least one of a double-click operation, a click operation, or a long press operation. After receiving the triggering operation, the first client triggers the interaction instruction to generate the interaction message according to the first user account and the second user account. In the embodiment of the present disclosure, the interaction instruction is a double-click, for example.

The interaction message is different from the chat message. In an embodiment, the interaction message is implemented as a system message, or is implemented as a customized message. For example, the interaction instruction is a light interaction instruction, and the interaction message is a light interaction message.

In step 306, the interaction message is transmitted to the second user account. The interaction message is configured to trigger displaying of an animation of the avatar of the second user account in a second chat interface by a second client, and the second client is logged with the second user account.

In an embodiment, the interaction message not only triggers displaying of the animation of the avatar of the second user account in the second chat interface by the second client, but also triggers displaying of the interaction message in the second chat interface by the second client.

In conclusion, according to the method provided in the embodiment of the present disclosure, the interaction message is transmitted to the second user account in response to the interaction with the avatar of the second user account. The interaction message is configured to trigger displaying of the animation of the avatar of the second user account in the second chat interface by the second client. Therefore, a new interaction mode having a mild reminder function is provided. The new interaction mode is applicable to interesting interaction in chat scenarios having relaxed and pleasant atmosphere. In addition, the user can interact with other user accounts merely by interacting with the avatar, thereby reducing redundant human-computer interaction operations, simplifying an operation process, and thus improving operation efficiency and interaction efficiency.

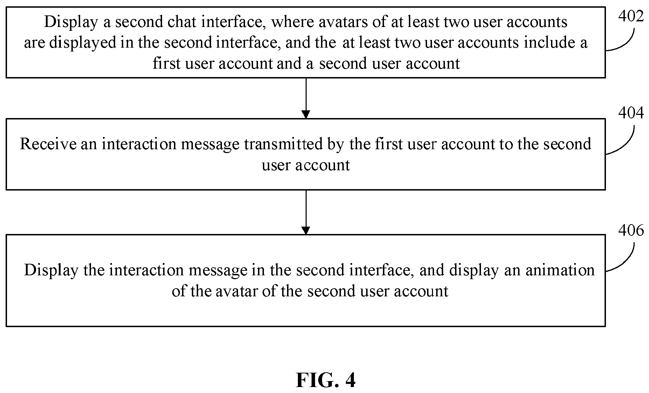

FIG. 4 is a flowchart of a message receiving method according to an exemplary embodiment of the present disclosure. In the embodiment of the present disclosure, the method is performed by the second client shown in FIG. 1, for example. The second client is logged with a second user account. The method includes the following steps 402 to 406.

In step 402, a second chat interface is displayed. Avatars of at least two user accounts are displayed in the second chat interface, and the at least two user accounts include a first user account and the second user account.

The second chat interface is a two-person chat interface or a multi-person group chat interface. A list of chat messages ranked according to time is displayed in the second chat interface. In each chat message in the chat message list, an avatar of a user account as a transmitter and content of the chat message are displayed. In an embodiment, a remark name, a group nickname, or a customized nickname of the user account is displayed in each chat message. The remark name is a name remarked for a current user account by another user account. The group nickname is a nickname customized by the current user account in a group. The customized nickname is a nickname customized by the current user account in the client.

For example, the second chat interface is a multi-person group chat interface. The group includes at least two user accounts. The at least two user accounts include the first user account, the second user account, and other user accounts.

In step 404, an interaction message transmitted by the first user account to the second user account is received.

The second client receives the interaction message transmitted by the first user account to the second user account. The interaction message is different from the chat message. In an embodiment, the interaction message is implemented as a system message, or is implemented as a customized message. In an embodiment, the interaction message is a light interaction message.

In an embodiment, the second client receives the interaction message transmitted by a server. The first user account transmits the interaction message to the server and requests the server to forward the interaction message to the second user account.

In step 406, the interaction message is displayed in the second chat interface, and an animation of the avatar of the second user account is displayed.

In an embodiment, the interaction message not only triggers displaying of the animation of the avatar of the second user account in the second chat interface by the second client, but also triggers displaying of the interaction message in the second chat interface by the second client.

In conclusion, according to the method provided in the embodiment of the present disclosure, when receiving the interaction message transmitted by the first user account to the second user account, the second client displays the animation of the avatar of the second user account and the interaction message in the second chat interface. Therefore, a new interaction mode having a mild reminder function is provided. The new interaction mode is applicable to interesting interaction in chat scenarios having relaxed and pleasant atmosphere.

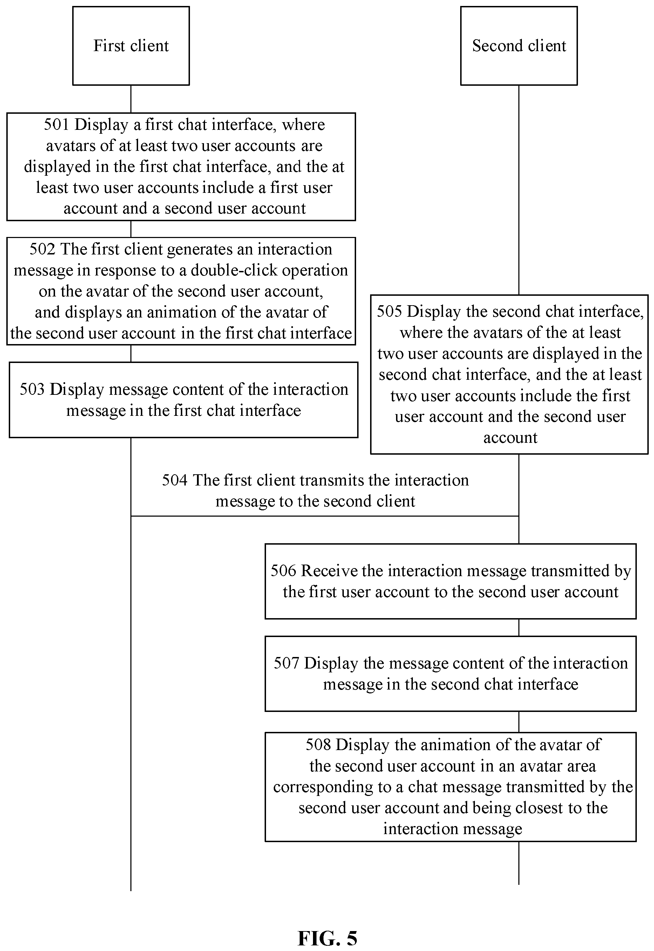

FIG. 5 is a flowchart of a message transmitting/receiving method according to another exemplary embodiment of the present disclosure. In the embodiment of the present disclosure, the method is performed by the first client and the second client shown in FIG. 1, for example. The method includes the following steps 501 to 508.

In step 501, the first client displays a first chat interface. Avatars of at least two user accounts are displayed in the first chat interface, and the at least two user accounts include a first user account and a second user account.

The first chat interface is a two-person chat interface or a multi-person group chat interface. A list of chat messages ranked according to time is displayed in the first chat interface.

In step 502, the first client generates an interaction message in response to a double-click operation on the avatar of the second user account, and an animation of the avatar of the second user account is displayed in the first chat interface.

A first user performs a double-click operation on the avatar of the second user account. After receiving the double-click operation, the first client generates the double-click instruction. The first client generates the interaction message according to the first user account and the second user account in response to the double-click instruction. In the embodiment of the present disclosure, the interaction instruction is a double-click instruction, for example.

The interaction message is different from the chat message. For example, the interaction message is the light interaction message. In an embodiment, the interaction message is implemented as a system message. In an embodiment, the system message carries the first user account and the second user account. In an embodiment, the system message carries the first user account, the second user account, and an interaction identifier. The interaction identifier represents that a message type is the interaction message. In an embodiment, the system message further carries an action identifier. The action identifier represents an action performed on the second user account by the first user account.

In an embodiment, the interaction message carries the first user account and the second user account. In an embodiment, the interaction message further carries an interaction identifier. In an embodiment, the interaction message further carries an action identifier.

In an embodiment, the first client further displays the animation of the avatar of the second user account in the first chat interface. The avatar animation is an animation displayed based on the avatar of the second user account. Exemplarily, the avatar animation includes, but is not limited to, at least one of the following: an animation for shaking the avatar of the second user account, an animation for rotating the avatar of the second user account, an animation for superposing a filter to the avatar of the second user account, an animation for superposing other display elements (for example, a human hand) to the avatar of the second user account, or an animation for zooming out or zooming in the avatar of the second user account.

In the embodiment of the present disclosure, the avatar animation is the animation for shaking the avatar of the second user account, for example.

In an embodiment, the first chat interface includes multiple avatars of the second user account. An animation of at least one of the avatars of the second user account is displayed in an avatar area in response to the double-click operation on the avatar. For example, each time the second user account transmits a chat message, the chat message and the avatar of the second user account are both displayed in the first chat interface. Therefore, the first user can perform the double-click operation on any one of the avatars of the second user account. In this way, the double-click instruction is triggered, and the animation of the avatar is displayed in the avatar area.

In step 503, the first client displays the interaction message in the first chat interface.

In an embodiment, the first client displays content of the interaction message in the first chat interface. The interaction message and the chat message are displayed in different manners. Exemplarily, content of the interaction message is displayed in a text form. Content of the chat message is displayed in a bubble form. That is, the interaction message is not displayed in the bubble form. Instead, the interaction message is displayed in a message display manner of the system message.

In an embodiment, the content of the interaction message is customized by the first client. For example, the content of the interaction message is: you tapped "user account 2". Forwarding of the interaction message on a server side is delayed. In order to avoid the delay, the content of the interaction message is customized and displayed by the first client. Exemplarily, the interaction message carries the first user account, the second user account, and the action identifier. The action identifier represents an action performed on the second user account by the first user account. The first client customizes the content of the interaction message according to the first user account, the second user account, and the action identifier in the interaction message. Exemplarily, the customized content of the interaction message includes a name of the first user account, a name of the second user account, and a description of the action performed on the second user account by the first user account.

In an embodiment, the content of the interaction message is customized by the server. The first client transmits the interaction message to the server. The server customizes the content of the interaction message after receiving the interaction message, and transmits the content of the interaction message to the first user account of the first client and the second user account of the second client.

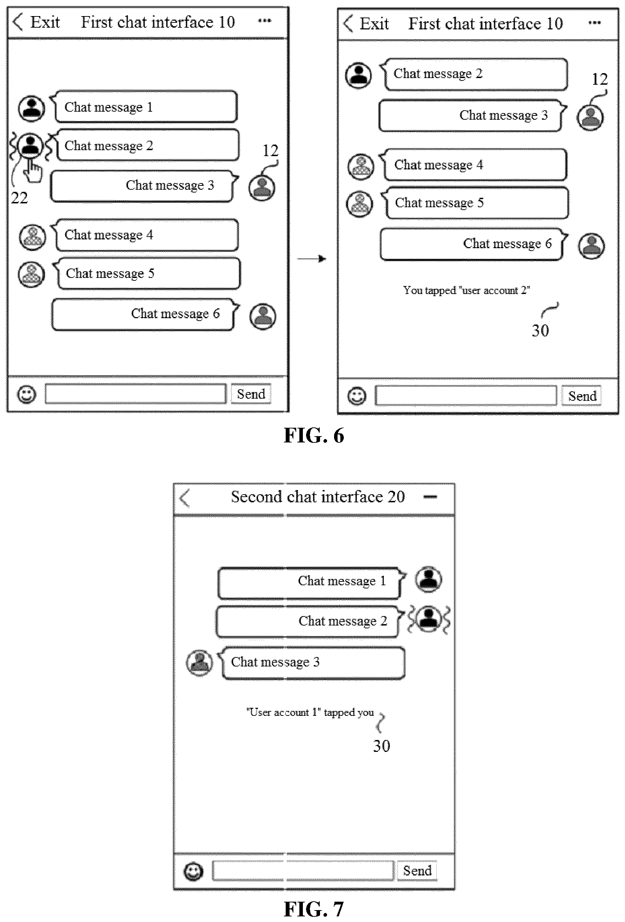

In an embodiment, since the avatar of the second user account can be displayed at any position in the chat message list, the avatar of the second user account clicked by the first user may be located in the middle of the chat message list. In this case, the method further includes the following step:
scrolling to a last message in the first chat interface automatically in response to displayed content in the first chat interface not including the last message, the last message including the message content of the interaction message. As shown in FIG. 6, the first chat interface 10 includes an avatar 12 of the first user account and an avatar 22 of the second user account. After the first user performs a double-click operation on the avatar 22 of the second user account, a shaking animation of the avatar 22 of the second user account is displayed. However, a chat message 2 is located in the front, and content displayed at a bottom of the chat message list cannot be displayed in the first chat interface 10. Therefore, the first chat interface 10 automatically scrolls to a last message in the first chat interface. The last message includes an interaction message 30: you tapped "user account 2". The user account 2 is a name of the second user account. In this way, the first user timely learns that the interaction message 30 is successfully triggered, thereby avoiding a case that the user continuously performs double-click operations on the avatar 22 of the second user account for multiple times.

The last message is a last message received in the first chat interface. Some of the messages in the chat message list are displayed in the first chat interface. By sliding the chat message list in the first chat interface up and down, the messages in the chat message list displayed in the first chat interface can be changed. The last message is located in a bottom area of the chat message list. If the content displayed in the first chat interface does not include the content in the bottom area of the chat message list, the first chat interface does not include the last message.

In an embodiment, since the chat messages are ranked according to time, the latest message is displayed in the bottom display area of the first chat interface.

In an embodiment, the content of the interaction message includes the name of the first user account, the name of the second user account, and the description of the action performed on the second user account by the first user account. The names include at least one of a remark name, a group nickname, or a customized nickname. The description of the action includes, but is not limited to, at least one of the following: touch, tap, hammer, hit, kick, slash, kiss, or push. For example, the content of the interaction message may be: "name of the first user account" tapped "name of the second user account", or "name of the first user account" pushed "name of the second user account".

Exemplarily, a priority of the remark name is superior than a priority of the group nickname, and the priority of the group nickname is superior than a priority of the customized nickname. When there is a remark name, the remark name is preferentially displayed. When there is no remark name and there is a group nickname, the group nickname in a current group is preferentially displayed. When there is no remark name and group nickname, the customized nickname is displayed.

Exemplarily, since the first user account is an account that is logged in the first client, in the first client, "you" may be used as the remark name of the first user account.

In step 504, the first client transmits the interaction message to the second client.

The first client transmits the interaction message to the second client through a server. In an embodiment, the first client transmits the interaction message to the server in a system message format (or a newly defined message format). If the server verifies that the interaction message meets a transmission condition, the server transmits the interaction message to all user accounts in the chat interface. When the chat interface is a two-person chat interface, the server transmits the interaction message to the first user account and the second user account. When the chat interface is a group chat interface, the server transmits the interaction message to the first user account, the second user account, and the other user accounts.

In an embodiment, the transmission condition includes a condition for limiting a transmission frequency. The transmission condition includes, but is not limited to, at least one of the transmission conditions:
Condition 1: a quantity of times of transmitting the interaction message to the second user account by the first user account within a time period A does not exceed x. For example, a quantity of times of transmitting the interaction message to a same account within two seconds does not exceed 1.
Condition 2: a quantity of times of transmitting the interaction message by all user accounts in a same group within a time period B does not exceed y. For example, a quantity of times of transmitting the interaction message by all of the user accounts in a same group within ten seconds does not exceed 30.

In an embodiment, the transmission condition includes: an association relationship exists between the first user account and the second user account. The association relationship between the first user account and the second user account indicates that the first user account and the second user account are friends. For example, if the first user account is not a friend of the second user account, the first user account is not allowed to transmit the interaction message to the second user account.

If the interaction message transmitted by the first client does not meet the transmission condition, the server transmits a failure prompt to the first client. Exemplarily, the failure prompt is "Do not transmit the tap message frequently".

In step 505, the second client displays a second chat interface. Avatars of the at least two user accounts are displayed in the second chat interface, and the at least two user accounts include the first user account and the second user account.

The second chat interface is a two-person chat interface or a multi-person group chat interface. A list of chat messages ranked according to time is displayed in the second chat interface.

The first chat interface and the second chat interface are interfaces presented on two clients logged with different user accounts in a same chat room (a two-person chat or a multi-person group chat).

In the two-person chat scenario, the first chat interface and the second chat interface are both interfaces for conducting a chat between the first user account and the second user account. In the multi-person group chat scenario, a group corresponding to the first chat interface is same as a group corresponding to the second chat interface. The first chat interface is an interface in the first client, and the first client is logged with the first user account. In an embodiment, the first client displays the message transmitted by the first user account on a right side of the first chat interface, and displays, on a left side of the first chat interface, messages transmitted by the user accounts other than the first user account. The second chat interface is an interface in the second client, and the second client is logged with the second user account. In an embodiment, the second client displays the message transmitted by the second user account on a right side of the second chat interface, and displays, on a left side of the second chat interface, messages transmitted by the user accounts other than the second user account.

In step 506, the second client receives the interaction message transmitted by the first user account to the second user account.

The second client receives the interaction message forwarded by the server. The interaction message is encapsulated in the system message format. In an embodiment, the interaction message includes the first user account, the second user account, and the interaction identifier. The interaction identifier represents that the message type is the interaction message.

Exemplarily, content of the interaction message is displayed in a text form. The chat message is displayed in a bubble form. That is, the interaction message is not displayed in the bubble form. Instead, the interaction message is displayed in a message display manner of the system message.

In an embodiment, the content of the interaction message is customized by the second client, for example, "user account 1" tapped you. In an embodiment, the content of the interaction message is customized by the server, and the second client receives the content of the interaction message forwarded by the server.

In an embodiment, the message of the interaction message includes the name of the first user account, the name of the second user account, and the description of the action performed on the second user account by the first user account. The names include at least one of a remark name, a group nickname, or a customized nickname. The description of the action includes, but is not limited to, at least one of the following: touch, tap, hammer, hit, kick, slash, kiss, or push. For example, the content of the interaction message may be: the first user account tapped the second user account, or the first user account pushed the second user account.

In step 507, the second client displays content of the interaction message in the second chat interface.

In an embodiment, the second client displays the content of the interaction message in the second chat interface. The interaction message and the chat message are displayed in different manners. The second chat interface includes a list of chat messages ranked according to time. The second client further displays the content of the interaction message at a bottom of the chat message list in the second chat interface.

In step 508, the second client displays an animation of the avatar of the second user account in an avatar area corresponding to a chat message transmitted by the second user account and being closest to the interaction message.

The avatar animation is an animation displayed based on the avatar of the second user account. Exemplarily, the avatar animation includes, but is not limited to, at least one of the following: an animation for shaking the avatar of the second user account, an animation for rotating the avatar of the second user account, an animation for superposing a filter to the avatar of the second user account, an animation for superposing other display elements (for example, a human hand) to the avatar of the second user account, or an animation for zooming out or zooming in the avatar of the second user account.

In an embodiment, the animation of the avatar of the second user account is associated with the action description in the content of the interaction message, such as tapping the avatar of the second user account or touching the avatar of the second user account.

Since a distance exists between the message content of the interaction message and the avatar of the second user account, the second client first determines the chat message in chat messages transmitted by the second user account which is closest to the interaction message, and then displays the animation of an avatar of the second user account corresponding to the chat message closest to the interaction message.

As shown in FIG. 7, if it is determined that the chat message in the chat messages transmitted by the second user account being closest to the interaction message 30 is chat message 2, the second client displays a shaking animation of the avatar of the second user account corresponding to the chat message 2.

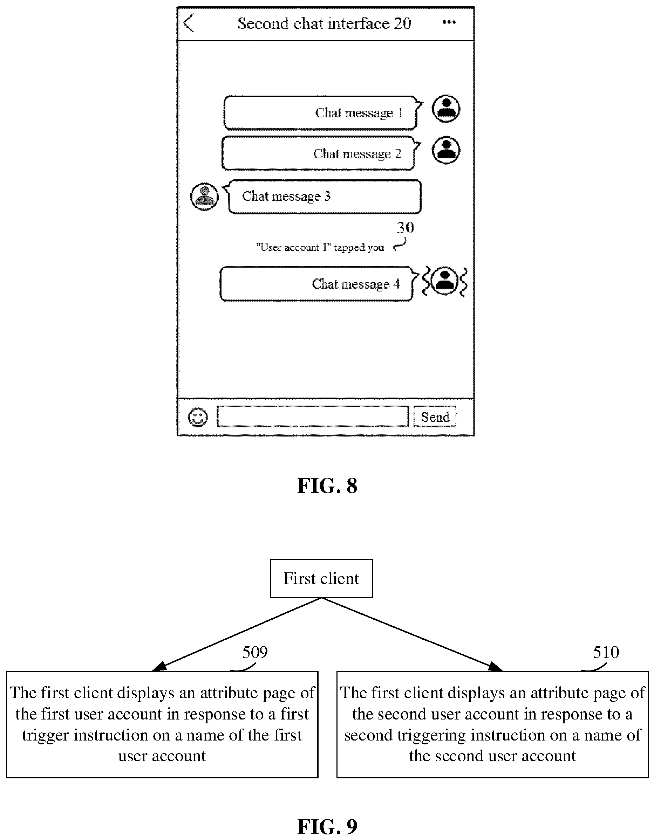

As shown in FIG. 8, if it is determined that the chat message in the chat messages transmitted by the second user account being closest to the interaction message 30 is chat message 4, the second client displays a shaking animation of the avatar of the second user account corresponding to the chat message 4.

In an embodiment, if a distance between the chat message 2 and the interaction message 30 is the same as a distance between the chat message 4 and the interaction message, the chat message 2 located in the front is preferentially selected. A distance between two messages is measured by a quantity of messages between the two messages.

Step 507 may be performed before step 508, or may be performed after step 508. Alternatively, step 507 and step 508 may be performed simultaneously.

In case of the multi-person group chat, the user accounts other than the first user account and the second user account also receive the interaction message. Other clients logged with the other user accounts voluntarily encapsulate the content of the interaction message for display. The other clients may or may not display the shaking animation of the avatar of the second user account.

The second user account may be same as the first user account. That is, a user may transmit the interaction message to the user himself, to trigger displaying of the content of the interaction message: you tapped yourself.

In the related art, a group chat function is used as an example. When a user account A expects to interact with a user account B, the user account A may transmit a group chat message: "@user account B". In this case, the user account B receives a strong reminder and views the group chat message. "@user account B" generates a strong reminder. However, such strong reminder function is improper in some scenarios.

In conclusion, according to the method provided in the embodiment of the present disclosure, the interaction message is transmitted to the second user account in response to the interaction with the avatar of the second user account. The interaction message is configured to trigger displaying of the animation of the avatar of the second user account in the second chat interface by the second client. Therefore, a new interaction mode having a mild reminder function is provided. The new interaction mode is applicable to interesting interaction in chat scenarios having relaxed and pleasant atmosphere.

In the embodiment of the present disclosure, the interaction message is a mild interaction message. Since the mild interaction message is a message simulating a user behavior instead of a message having message content customized by the user. The user may use the mild interaction message to express a slight interaction willingness in some scenarios where the user does not want to say, does not know what to say, or wants to express obscure meanings.

In addition, the user can interact with other user accounts merely by interacting with the avatar, thereby reducing redundant human-computer interaction operations, simplifying an operation process, and thus improving operation efficiency and interaction efficiency.

In another embodiment based on FIG. 5, the method further includes step 509 or step 510, as shown in FIG. 9.

In step 509, the first client displays a character attribute page of the first user account in response to a first trigger instruction on the name of the first user account.

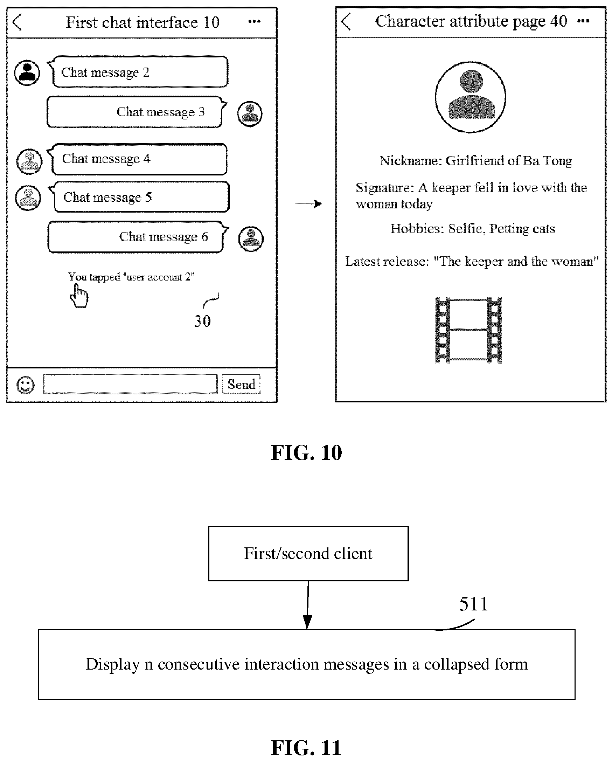

The interaction message includes the names of the two user accounts. When the user clicks the name of the first user account in the interaction message, the first trigger instruction is triggered on the first client. The first client displays an attribute page of the first user account in response to the first trigger instruction. As shown in FIG. 10, if the attribute page of the first user account is a character attribute page 40, the avatar, the nickname, a signature, hobbies, and a latest released video of the first user account are displayed on the character attribute page 40. In an embodiment, the attribute page 40 further includes at least one piece of the following information: a gender, a phone number, a two-dimensional code, a photo album, or a personal zone. In an embodiment, the attribute page of the first user account includes attribute information of the first user account.

In step 510, the first client displays a character attribute page of the second user account in response to a second trigger instruction on the name of the second user account.

Likewise, when the user clicks the name of the second user account in the interaction message, the second trigger instruction is triggered on the first client. The first client displays an attribute page of the second user account in response to the second trigger instruction. In an embodiment, the attribute page of the second user account includes attribute information of the second user account.

In an embodiment, when a chat interface of any client displays an interaction message transmitted by the client itself or other client, the client displays an attribute page of a user account in response to a trigger instruction on a name of the user account in the interaction message.

In conclusion, according to the method provided in the embodiment of the present disclosure, the client displays the character attribute page of the user account in response to the trigger instruction on the name of the user account in the interaction message. Therefore, a human-computer interaction mode enabling quick viewing of the attribute page of the user account can be provided in the chat interface, thereby improving human-computer interaction efficiency.

In another embodiment based on FIG. 5, the method further includes step 511, as shown in FIG. 11.

In step 511, n consecutive interaction messages are displayed in a collapsed form.

When n consecutive interaction messages exist in a chat interface of any client, all or some of the n interaction messages may be displayed in a collapsed form according to a collapsing policy.

In an embodiment, the collapsing policy includes at least one of a read collapsing policy or an interruption collapsing policy.

### I. Read collapsing policy:

The first client displays all or some of the n consecutive interaction messages in a collapsed form in response to the n interaction messages existing in the first chat interface and the n interaction messages being in a read state, n being an integer greater than 1. Likewise, the second client displays all or some of the n consecutive interaction messages in a collapsed form in response to the n interaction messages existing in the second chat interface and the n interaction messages being in a read state, n being an integer greater than 1.

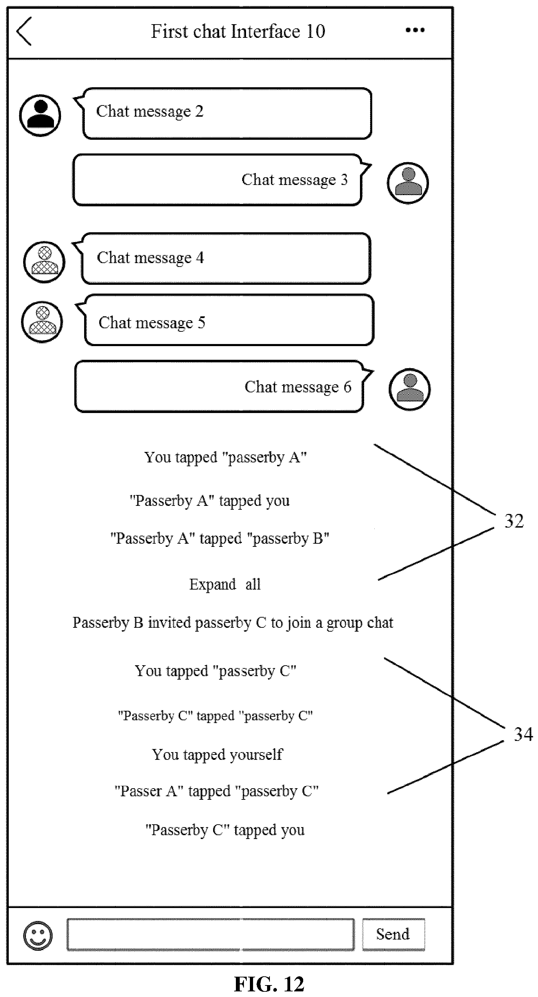

As shown in FIG. 12, when the first chat interface 10 includes five consecutive interaction messages 32 in the read state, the first client displays the last two of the five interaction messages 32 in a collapsed form. An "expand all" button is displayed at the two collapsed interaction messages. When the user clicks the "expand all" button, the two interaction messages are restored and displayed.

If the first four interaction messages in the five consecutive interaction messages 34 are in the read state and the last one interaction message is in an unread state, the five interaction messages are not collapsed temporarily.

### II. Interruption collapsing policy:

The first client displays all or some of m consecutive interaction messages in a collapsed form in response to the m interaction messages existing in the first chat interface and the m interaction messages being prior to a last non-interaction message. The non-interaction message refers to a message other than the interaction message, for example, the non-interaction message being a chat message or a system message, and m is an integer greater than 1. Likewise, the second client displays all or some of the m consecutive interaction messages in a collapsed form in response to the m interaction messages existing in the second chat interface and the m interaction messages being prior to the last non-interaction message, m being an integer greater than 1.

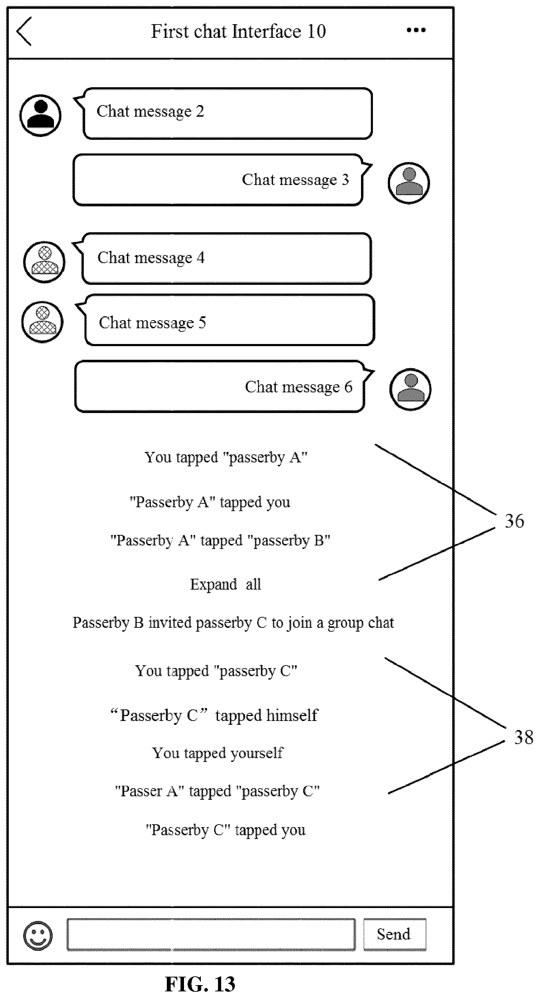

As shown in FIG. 13, when the first chat interface includes multiple (more than five) consecutive interaction messages 36, the first three interaction messages are reserved and displayed, and the remaining interaction messages are displayed in a collapsed form. An "expand all" button is displayed at the collapsed interaction messages. When the user clicks the "expand all" button, the multiple interaction messages are restored and displayed. A system message "passerby B invited passerby C to join the group chat" is inserted among the multiple interaction messages 36. Since multiple interaction messages 38 are consecutive, the multiple interaction messages 38 are not collapsed temporarily.

In view of the above collapsing policy, the present disclosure includes the following features.
1. If a non-interaction message (for example, a chat message or a system message) is inserted between two interaction messages, counting is restarted from a first interaction message after the non-interaction message.
2. If a time division stamp (for example, 13:20) is displayed between two interaction messages, the time division stamp does not affect the continuous counting between the two interaction messages, and the time division stamp is ignored when messages are expanded for displaying again.
3. For multiple consecutive interaction messages among which no non-interaction message is inserted, the multiple consecutive interaction messages are stored in a same database (DB) message. The DB is a DB in the client for storing messages. One DB message includes multiple sub-messages. Each sub-message is configured to store one interaction message. When one interaction message is stored in the DB message, if the client receives another interaction message and no non-interaction message is inserted among the interaction messages, the another interaction message is stored in the DB message by updating message content; if the client receives another interaction message and a non-interaction message is inserted among the interaction messages, the another interaction message is stored by creating a new DB message.
4. The read state of the interaction message is updated according to a sliding state of the user on the client, or updated depending on whether the avatar animation of the second user account is displayed. In an example, when the second client displays the animation of the avatar of the second user account, a state of the interaction message is set as the read state. In another example, when the interaction message is displayed at a position located below 20% of a screen interface from top to bottom and the animation of the avatar of the second user account is displayed, the state of the interaction message is set as the read state. The following beneficial effects are realized: (1) The user has indeed read the interaction message. (2) The avatar of the second user account exists in a small-half screen of the interaction message located in the front, so that displaying of the animation of the avatar of the second user account is not missed, especially in a scenario of sliding to view the list of chat messages.

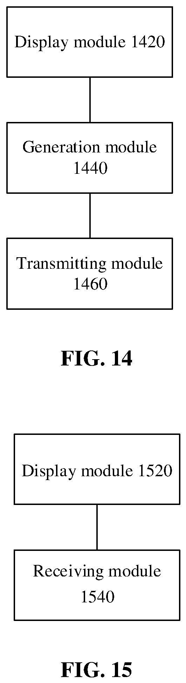

FIG. 14 is a block diagram of a message transmitting apparatus according to an exemplary embodiment of the present disclosure. The apparatus is logged with a first user account. The apparatus includes: a display module 1420, a generation module 1440 and a transmitting module 1460.

The display module 1420 is configured to display a first chat interface. Avatars of at least two user accounts are displayed in the first chat interface, and the at least two user accounts include the first user account and a second user account.

The generation module 1440 is configured to generate an interaction message in response to interaction with the avatar of the second user account.

The transmitting module 1460 is configured to transmit the interaction message to the second user account. The interaction message is configured to trigger displaying of an animation of the avatar of the second user account in a second chat interface by a second client, and the second client is logged with the second user account.

In an embodiment, the generation module 1440 is configured to generate the interaction message in response to a double-click operation on the avatar of the second user account.

In an embodiment, the display module 1420 is configured to display the animation of the avatar of the second user account in the first chat interface in response to the interaction with the avatar of the second user account.

In an embodiment, the display module 1420 is configured to display the interaction message in the first chat interface.

In an embodiment, the display module 1420 is configured to display content of the interaction message in the first chat interface. The interaction message and a chat message are displayed in different manners.

In an embodiment, the interaction message and a system message are displayed in different manners.

In an embodiment, the display module 1420 is configured to scroll to a last message in the first chat interface automatically in response to displayed content in the first chat interface not including the last message. The last message includes the content of the interaction message.

In an embodiment, the message content includes a name of the first user account, a name of the second user account, and a description of an action performed on the second user account by the first user account.

The names include at least one of a remark name, a group nickname, or a customized nickname.

In an embodiment, the description of the action includes, but is not limited to, at least one of the following: touch, tap, hammer, hit, kick, slash, or kiss.

In an embodiment, the display module 1420 is configured to: display an attribute page of the first user account in response to a first interaction with the name of the first user account; or display an attribute page of the second user account in response to a second interaction with the name of the second user account.

In an embodiment, the display module 1420 is configured to: display all or some of n consecutive interaction messages in a collapsed form in response to the n interaction messages existing in the first chat interface and the n interaction messages being in a read state; or display all or some of m consecutive interaction messages in a collapsed form in response to the m interaction messages existing in the first chat interface and the m interaction messages being prior to a last non-interaction message, m being an integer greater than 1, and the non-interaction message being a message other than the m interaction messages.

FIG. 15 is a block diagram of a message receiving apparatus according to an exemplary embodiment of the present disclosure. The apparatus is logged with a second user account. The apparatus includes: a display module 1520 and a receiving module 1540.

The display module 1520 is configured to display a second chat interface. Avatars of at least two user accounts are displayed in the second chat interface, and the at least two user accounts include a first user account and the second user account.

The receiving module 1540 is configured to receive an interaction message transmitted by the first user account to the second user account.

The display module 1520 is configured to display the interaction message in the second chat interface, and display an animation of the avatar of the second user account in the second chat interface.

In an embodiment, the display module 1520 is configured to display content of the interaction message in the second chat interface. The interaction message and a chat message are displayed in different manners.

In an embodiment, the display module 1520 is configured to display the animation of the avatar of the second user account in an avatar area corresponding to a chat message transmitted by the second user account and being closest to the interaction message.

In an embodiment, the display module 1520 is configured to: display all or some of n consecutive interaction messages in a collapsed form in response to the n interaction messages existing in the second chat interface and the n interaction messages being in a read state; or display all or some of m consecutive interaction messages in a collapsed form in response to the m interaction messages existing in the second chat interface and the m interaction messages being prior to a last non-interaction message.

According to the message transmitting apparatus in the above embodiment, only division of the functional modules is illustrated. In actual application, the functions may be assigned to different functional modules for completion as required. In other words, the device is divided into different functional modules to complete all or a part of the functions described above. In addition, the message transmitting apparatus in the above embodiment shares the same concept as the message transmitting method. For a specific implementation thereof, one may refer to the method embodiment, and the details are not described herein again.

Likewise, according to the message receiving apparatus in the above embodiment, only division of the functional modules is illustrated. In actual application, the functions may be assigned to different functional modules for completion as required. In other words, the device is divided into different functional modules to complete all or a part of the functions described above. In addition, the message receiving apparatus in the above embodiment shares the same concept as the message receiving method. For a specific implementation thereof, one may refer to the method embodiment, and the details are not described herein again.

A computer device (a terminal or a server) is further provided according to the present disclosure. The computer device runs a first client. The first client is logged with a first user account. The computer device includes a processor and a memory. The memory stores at least one instruction. The at least one instruction is loaded and executed by the processor to perform the following operations:
displaying a first chat interface, where avatars of at least two user accounts are displayed in the first chat interface, and the at least two user accounts include the first user account and a second user account;
generating an interaction message in response to an interaction with the avatar of the second user account; and
transmitting the interaction message to the second user account, where the interaction message is configured to trigger displaying of an animation of the avatar of the second user account in a second chat interface by a second client, and the second client is logged with the second user account.

In an implementation, the at least one instruction is loaded and executed by the processor to perform the following operation:
generating the interaction message in response to a double-click operation on the avatar of the second user account.

In an implementation, the at least one instruction is loaded and executed by the processor to perform the following operation:
displaying the animation of the avatar of the second user account in the first chat interface in response to the interaction with the avatar of the second user account.

In an implementation, the at least one instruction is loaded and executed by the processor to perform the following operation:
displaying an animation of at least one of the avatars of the second user account in an avatar area in response to a double-click operation on the avatar.

In an implementation, the at least one instruction is loaded and executed by the processor to perform the following operation:
displaying the interaction message in the first chat interface.

In an implementation, the at least one instruction is loaded and executed by the processor to perform the following operation:
displaying content of the interaction message in the first chat interface, where the interaction message and a chat message are displayed in different manners.

In an implementation, the at least one instruction is loaded and executed by the processor to perform the following operation:
scrolling to a last message in the first chat interface automatically in response to displayed content in the first chat interface not including the last message, the last message including the content of the interaction message.

In an implementation, the message content includes a name of the first user account, a name of the second user account, and a description of an action performed on the second user account by the first user account.

The names include at least one of a remark name, a group nickname, or a customized nickname.

In an implementation, the at least one instruction is loaded and executed by the processor to perform the following operation:
displaying an attribute page of the first user account in response to a first interaction with the name of the first user account; or displaying an attribute page of the second user account in response to a second interaction with the name of the second user account.

In an implementation, the at least one instruction is loaded and executed by the processor to perform the following operation:
displaying all or some of n consecutive interaction messages in a collapsed form in response to the n interaction messages existing in the first chat interface and the n interaction messages being in a read state, n being an integer greater than 1; or displaying all or some of m consecutive interaction messages in a collapsed form in response to the m interaction messages existing in the first chat interface and the m interaction messages being prior to a last non-interaction message, m being an integer greater than 1, and the non-interaction message being a message other than the m interaction messages.

A computer device (a terminal or a server) is further provided according to the present disclosure. The computer device runs a second client. The second client is logged with a second user account. The computer device includes a processor and a memory. The memory stores at least one instruction. The at least one instruction is loaded and executed by the processor to perform the following operations:
displaying a second chat interface, where avatars of at least two user accounts are displayed in the second chat interface, and the at least two user accounts include a first user account and the second user account;
receiving an interaction message transmitted by the first user account to the second user account; and
displaying the interaction message in the second chat interface, and displaying an animation of the avatar of the second user account in the second chat interface.

In an implementation, the at least one instruction is loaded and executed by the processor to perform the following operation:
displaying content of the interaction message in the second chat interface, where the interaction message and a chat message are displayed in different manners.

In an implementation, the at least one instruction is loaded and executed by the processor to perform the following operation:
displaying the animation of the avatar of the second user account in an avatar area corresponding to a chat message transmitted by the second user account and being closest to the interaction message.

In an implementation, the at least one instruction is loaded and executed by the processor to perform the following operation:
displaying all or some of n consecutive interaction messages in a collapsed form in response to the n interaction messages existing in the second chat interface and the n interaction messages being in a read state; or displaying all or some of m consecutive interaction messages in a collapsed form in response to the m interaction messages existing in the second chat interface and the m interaction messages being prior to a last non-interaction message.

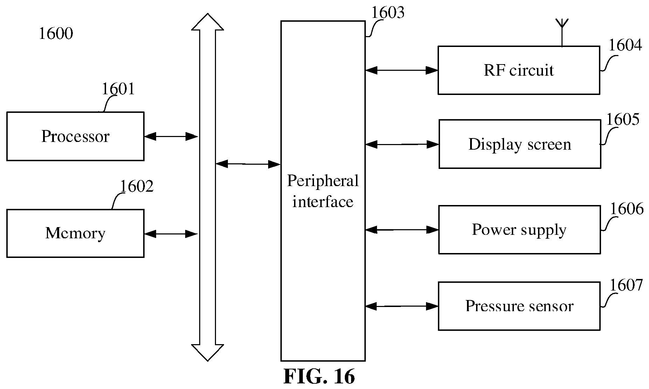

The computer device may be a computer device shown in FIG. 16.

FIG. 16 is a structural block diagram of a computer device 1600 according to an exemplary embodiment of the present disclosure. The computer device 1600 may be a smartphone, a tablet computer, a moving picture experts group audio layer III (MP3) player, a moving picture experts group audio layer IV (MP4) player, a notebook computer, or a desktop computer. The computer device 1600 may also be referred to as user equipment, a portable computer device, a laptop computer device, or a desktop computer device or the like.

Generally, the computer device 1600 includes a processor 1601 and a memory 1602.

The processor 1601 may include one or more processing cores, such as a 4-core processor or an 8-core processor. The processor 1601 may be implemented as at least one of the following: digital signal processing (DSP), a field-programmable gate array (FPGA), or a programmable logic array (PLA). The processor 1601 may include a main processor and a coprocessor. The main processor is configured to process data in a wake-up state, which is also referred to as a central processing unit (CPU). The coprocessor is a low power consumption processor configured to process data in a standby state. In some embodiments, a graphics processing unit (GPU) may be integrated in the processor 1601. The GPU is configured to render and draw content that needs to be displayed on a display screen. In some embodiments, the processor 1601 may further include an artificial intelligence (AI) processor. The AI processor is configured to process computing operations related to machine learning.

The memory 1602 may include one or more computer-readable storage media that may be non-transitory. The memory 1602 may further include a high-speed random access memory and a non-volatile memory, for example, one or more magnetic disk storage devices and flash memory storage devices. In some embodiments, the non-transitory computer-readable storage media in the memory 1602 is configured to store at least one instruction. The at least one instruction is executed by the processor 1601 to implement the message transmitting method provided in the method embodiment of the present disclosure.

In some embodiments, the computer device 1600 may include a peripheral interface 1603 and at least one peripheral device. The processor 1601, the memory 1602, and the peripheral interface 1603 may be connected via a bus or a signal line. Each peripheral device may be connected to the peripheral interface 1603 via a bus, a signal line, or a circuit board. Specifically, the peripheral device includes at least one of a radio frequency (RF) circuit 1604, a display screen 1605, or a power supply 1606.

The peripheral interface 1603 may be configured to connect at least one peripheral device related to input/output (I/O) to the processor 1601 and the memory 1602. In some embodiments, the processor 1601, the memory 1602, and the peripheral interface 1603 are integrated on a same chip or a same circuit board. In some other embodiments, any one or two of the processor 1601, the memory 1602, or the peripheral interface 1603 may be implemented on an independent chip or circuit board. Specific configuration is not limited in the embodiment of the present disclosure.

The RF circuit 1604 is configured to receive and transmit an RF signal that is also referred to as an electromagnetic signal. The RF circuit 1604 communicates with a communication network and other communication devices through the electromagnetic signal. The RF circuit 1604 converts an electrical signal to an electromagnetic signal for transmission, or converts a received electromagnetic signal to an electrical signal. In an embodiment, the RF circuit 1604 includes an antenna system, an RF transceiver, one or more amplifiers, a tuner, an oscillator, a digital signal processor, a codec chipset, a user identity module card, and the like. The RF circuit 1604 may communicate with other computer devices through at least one wireless communication protocol. The wireless communication protocol includes, but is not limited to a world wide web, a metropolitan area network, an intranet, generations of mobile communication networks (2G, 3G, 4G, and 5G), a wireless local area network and/or a wireless fidelity (Wi-Fi) network. In some embodiments, the RF circuit 1604 may further include a near field communication (NFC)-related circuit. Specific configuration is not limited in the present disclosure.

The display screen 1605 is configured to display a user interface (UI). The UI may include a graph, a text, an icon, a video, and any combination thereof. When the display screen 1605 is a touch display screen, the display screen 1605 can collect touch signals on or above a surface of the display screen 1605. The touch signal may be inputted to the processor 1601 as a control signal for processing. In this case, the display screen 1605 may be further configured to provide a virtual button and or a virtual keyboard that are also referred to as a soft button and/or a soft keyboard. In some embodiments, there may be one display screen 1605 arranged on a front panel of the computer device 1600. In some other embodiments, there may be at least two display screens 1605 which are arranged on different surfaces of the computer device 1600 or folded. In some still other embodiments, the display screen 1605 may be a flexible display screen arranged on a bent surface or a folded surface of the computer device 1600. The display screen 1605 may be configured as a non-rectangular irregular figure, that is, an irregular screen. The display screen 1605 may be made of materials such as a liquid crystal display (LCD) or an organic light-emitting diode (OLED).

The power supply 1606 is configured to supply power to components in the computer device 1600. The power supply 1606 may be an alternating current, a direct current, a disposable battery, or a rechargeable battery. When the power supply 1609 includes the rechargeable battery, the rechargeable battery may be a wired rechargeable battery or a wireless rechargeable battery. The wired rechargeable battery is a battery charged through a wired circuit, and the wireless rechargeable battery is a battery charged through a wireless coil. The rechargeable battery may be further configured to support a fast charging technology.

In some embodiments, the computer device 1600 further includes a pressure sensor 1607. The pressure sensor 1607 may be arranged at a side frame of the computer device 1600 and/or below the touch display screen 1605. In a case that the pressure sensor 1607 is arranged at the side frame of the computer device 1600, a grip signal of a user on the computer device 1600 may be detected, and the processor 1601 may perform left/right hand recognition or a shortcut operation according to the grip signal collected by the pressure sensor 1607. When the pressure sensor 1607 is arranged below the display screen 1605, the processor 1601 controls an operable control on the UI interface according to a pressure operation performed by the user on the display screen 1605. The operable control includes at least one of a button control, a scroll-bar control, an icon control, and a menu control.

A person skilled in the art may understand that the structure shown in FIG. 16 does not constitute a limitation on the computer device 1600, and the computer device may include more or fewer components than those shown in the figure, some components may be combined, or the components may be arranged in different manners.

The memory further includes one or more programs. The one or more programs are stored in the memory, and include instructions for performing the message transmitting method or the message receiving method provided in the embodiments of the present disclosure.

A computer-readable storage medium is provided according to the present disclosure. The computer-readable storage medium stores at least one instruction. The at least one instruction is loaded and executed by a processor to implement the message transmitting method or the message receiving method provided in the above method embodiments.

A computer program product is further provided according to the present disclosure. The computer program product, when executed on a computer, causes a computer to perform the message transmitting method or the message receiving method provided in the above method embodiments.

The sequence numbers of the foregoing embodiments of the present disclosure are merely for description purpose, and are not intended to indicate the preference among the embodiments.

A person of ordinary skill in the art may understand that all or some of the steps of the foregoing embodiments may be implemented by hardware, or may be implemented by a program instructing related hardware. The program may be stored in a computer-readable storage medium. The storage medium may be: a ROM, a magnetic disk, or an optical disc.

## Claims

1. A message transmitting method, applicable to a first client, the first client being logged with a first user account, the method comprising:
displaying (302) a first chat interface, wherein avatars of at least two user accounts are displayed in the first chat interface, and the at least two user accounts comprise the first user account and a second user account;
generating (304) an interaction message in response to an interaction with the avatar of the second user account; **characterized in that** the method further comprises:
transmitting (306) the interaction message to the second user account, wherein the interaction message is configured to trigger displaying of an animation of the avatar of the second user account in a second chat interface by a second client, and the second client is logged with the second user account; and
controlling displaying, by a display module (1420), of the animation of the avatar of the second user account in the first chat interface in response to the interaction with the avatar of the second user account.

2. The method according to claim 1, wherein the generating the interaction message in response to the interaction with the avatar of the second user account comprises:
generating the interaction message in response to a double-click operation on the avatar of the second user account.

3. The method according to claim 1, wherein a plurality of avatars of the second user account are displayed in the first chat interface, and the displaying the animation of the avatar of the second user account in the first chat interface in response to the interaction with the avatar of the second user account comprises:
displaying an animation of at least one of the plurality of avatars of the second user account in an avatar area in response to a double-click operation on the avatar.

4. The method according to any one of claims 1 to 3, further comprising:
displaying the interaction message in the first chat interface.

5. The method according to claim 4, wherein the displaying the interaction message in the first chat interface comprises:
displaying message content of the interaction message in the first chat interface, wherein the interaction message and a chat message are displayed in different manners.

6. The method according to claim 5, wherein the displaying message content of the interaction message in the first chat interface comprises:
scrolling, automatically in response to displayed content in the first chat interface not comprising a last message, to the last message in the first chat interface, wherein the last message comprises the message content of the interaction message.

7. The method according to claim 5, wherein the message content comprises a name of the first user account, a name of the second user account, and a description of an action performed on the second user account by the first user account;
wherein the names comprise at least one of a remark name, a group nickname, or a customized nickname.

8. The method according to claim 7, further comprising:
displaying an attribute page of the first user account in response to a first interaction with the name of the first user account;
or
displaying an attribute page of the second user account in response to a second interaction with the name of the second user account.

9. The method according to claim 5, further comprising:
displaying at least one of n consecutive interaction messages in a collapsed form in response to the n interaction messages existing in the first chat interface and the n interaction messages being in a read state, n being an integer greater than 1;
or
displaying at least one of m consecutive interaction messages in a collapsed form in response to the m interaction messages existing in the first chat interface and the m interaction messages being prior to a last non-interaction message, m being an integer greater than 1, and the non-interaction message being a message other than the m interaction messages.

10. A message receiving method, applicable to a second client, the second client being logged with a second user account, the method comprising:
displaying (402) a second chat interface, wherein avatars of at least two user accounts are displayed in the second chat interface, and the at least two user accounts comprise a first user account and the second user account; **characterized in that** the method further comprises:
receiving (404) an interaction message transmitted by the first user account to the second user account;
displaying (406) the interaction message in the second chat interface, and displaying an animation of the avatar of the second user account in the second chat interface; and
controlling displaying, by a display module (1420), of the animation of the avatar of the second user account in a first chat interface in response to the interaction with the avatar of the second user account by a first client, and the first client being logged with the first user account.

11. The method according to claim 10, wherein the displaying the interaction message in the second chat interface comprises:
displaying message content of the interaction message in the second chat interface, wherein the interaction message and a chat message are displayed in different manners.

12. The method according to claim 10, wherein the displaying an animation of the avatar of the second user account in the second chat interface comprises:
displaying the animation of the avatar of the second user account in an avatar area corresponding to a chat message transmitted by the second user account and being closest to the interaction message.

13. The method according to any one of claims 10 to 12, further comprising:
displaying at least one of n consecutive interaction messages in a collapsed form in response to the n interaction messages existing in the second chat interface and the n interaction messages being in a read state;
or
displaying at least one of m consecutive interaction messages in a collapsed form in response to the m interaction messages existing in the second chat interface and the m interaction messages being prior to a last non-interaction message.

14. A computer device, comprising a processor and a memory, wherein the memory stores at least one instruction, at least one program, a code set, or an instruction set, and the at least one instruction, the at least one program, the code set, or the instruction set are loaded and executed by the processor to implement all the steps of the message transmitting method according to any one of claims 1 to 9 or the message receiving method according to any one of claims 10 to 13.

## Patentansprüche

1. Nachrichtenübertragungsverfahren, das auf einen ersten Client anwendbar ist, wobei der erste Client mit einem ersten Benutzerkonto angemeldet ist, wobei das Verfahren Folgendes umfasst:
Anzeigen (302) einer ersten Chatschnittstelle, wobei auf der ersten Chatschnittstelle Avatare von mindestens zwei Benutzerkonten angezeigt werden und die mindestens zwei Benutzerkonten ein erstes Benutzerkonto und ein zweites Benutzerkonto umfassen;
Erzeugen (304) einer Interaktionsnachricht in Reaktion auf eine Interaktion mit dem Avatar des zweiten Benutzerkontos; **dadurch gekennzeichnet, dass** das Verfahren ferner Folgendes umfasst:
Übertragen (306) der Interaktionsnachricht zum zweiten Benutzerkonto, wobei die Interaktionsnachricht dazu ausgelegt ist, das Anzeigen einer Animation des Avatars des zweiten Benutzerkontos auf einer zweiten Chatschnittstelle durch einen zweiten Client auszulösen, und der zweite Client mit dem zweiten Benutzerkonto angemeldet ist; und
Steuern des Anzeigens der Animation des Avatars des zweiten Benutzerkontos durch ein Anzeigemodul (1420) auf der ersten Chatschnittstelle in Reaktion auf die Interaktion mit dem Avatar des zweiten Benutzerkontos.

2. Verfahren nach Anspruch 1, wobei das Erzeugen der Interaktionsnachricht in Reaktion auf die Interaktion mit dem Avatar des zweiten Benutzerkontos Folgendes umfasst:
Erzeugen der Interaktionsnachricht in Reaktion auf eine Doppelklickoperation auf den Avatar des zweiten Benutzerkontos.

3. Verfahren nach Anspruch 1, wobei auf der ersten Chatschnittstelle eine Vielzahl von Avataren des zweiten Benutzerkontos angezeigt werden und das Anzeigen der Animation des Avatars des zweiten Benutzerkontos auf der ersten Chatschnittstelle in Reaktion auf die Interaktion mit dem Avatar des zweiten Benutzerkontos Folgendes umfasst:
Anzeigen einer Animation von mindestens einem der Vielzahl von Avataren des zweiten Benutzerkontos in einem Avatarbereich in Reaktion auf eine Doppelklickoperation auf den Avatar.

4. Verfahren nach einem der Ansprüche 1 bis 3, das ferner Folgendes umfasst:
Anzeigen der Interaktionsnachricht auf der ersten Chatschnittstelle.

5. Verfahren nach Anspruch 4, wobei das Anzeigen der Interaktionsnachricht auf der ersten Chatschnittstelle Folgendes umfasst:
Anzeigen eines Nachrichteninhalts der Interaktionsnachricht auf der ersten Chatschnittstelle, wobei die Interaktionsnachricht und eine Chatnachricht auf verschiedene Weise angezeigt werden.

6. Verfahren nach Anspruch 5, wobei das Anzeigen des Nachrichteninhalts der Interaktionsnachricht auf der ersten Chatschnittstelle Folgendes umfasst:
in Reaktion darauf, dass auf der ersten Chatschnittstelle ein Inhalt angezeigt wird, der eine letzte Nachricht nicht umfasst, automatisches Scrollen zur letzten Nachricht auf der ersten Chatschnittstelle, wobei die letzte Nachricht den Nachrichteninhalt der Interaktionsnachricht umfasst.

7. Verfahren nach Anspruch 5, wobei der Nachrichteninhalt einen Namen des ersten Benutzerkontos, einen Namen des zweiten Benutzerkontos und eine Beschreibung einer Aktion umfasst, die vom ersten Benutzerkonto auf dem zweiten Benutzerkonto durchgeführt wird;
wobei die Namen mindestens eines von einem Remark-Namen, einem Gruppenspitznamen oder einem benutzerdefinierten Spitznamen umfassen.

8. Verfahren nach Anspruch 7, das ferner Folgendes umfasst:
Anzeigen einer Attributseite des ersten Benutzerkontos in Reaktion auf eine erste Interaktion mit dem Namen des ersten Benutzerkontos;
oder
Anzeigen einer Attributseite des zweiten Benutzerkontos in Reaktion auf eine zweite Interaktion mit dem Namen des zweiten Benutzerkontos.

9. Verfahren nach Anspruch 5, das ferner Folgendes umfasst:
Anzeigen von mindestens einer von n aufeinanderfolgenden Interaktionsnachrichten in kollabierter Form in Reaktion darauf, dass die n Interaktionsnachrichten auf der ersten Chatschnittstelle existieren und die n Interaktionsnachrichten sich in einem Lesezustand befinden, wobei n eine Ganzzahl größer als 1 ist;
oder
Anzeigen von einer von m aufeinanderfolgenden Interaktionsnachrichten in kollabierter Form in Reaktion darauf, dass die m Interaktionsnachrichten auf der ersten Chatschnittstelle existieren und die m Interaktionsnachrichten vor einer letzten Nicht-Interaktionsnachricht liegen, wobei m eine Ganzzahl größer als 1 ist und die Nicht-Interaktionsnachricht eine andere Nachricht ist als die m Interaktionsnachrichten.

10. Nachrichtenempfangsverfahren, das auf einen zweiten Client anwendbar ist, wobei der zweite Client mit einem zweiten Benutzerkonto angemeldet ist, wobei das Verfahren Folgendes umfasst:
Anzeigen (402) einer zweiten Chatschnittstelle, wobei auf der zweiten Chatschnittstelle Avatare von mindestens zwei Benutzerkonten angezeigt werden und die mindestens zwei Benutzerkonten ein erstes Benutzerkonto und das zweite Benutzerkonto umfassen; **dadurch gekennzeichnet, dass** das Verfahren ferner Folgendes umfasst:
Empfangen (404) einer Interaktionsnachricht, die vom ersten Benutzerkonto zum zweiten Benutzerkonto übertragen wird;
Anzeigen (406) der Interaktionsnachricht auf der zweiten Chatschnittstelle und Anzeigen einer Animation des Avatars des zweiten Benutzerkontos auf der zweiten Chatschnittstelle; und
Steuern des Anzeigens der Animation des Avatars des zweiten Benutzerkontos durch ein Anzeigemodul (1420) auf einer ersten Chatschnittstelle in Reaktion auf die Interaktion mit dem Avatar des zweiten Benutzerkontos durch den ersten Client und darauf, dass der erste Client mit dem ersten Benutzerkonto angemeldet ist.

11. Verfahren nach Anspruch 10, wobei das Anzeigen der Interaktionsnachricht auf der zweiten Chatschnittstelle Folgendes umfasst:
Anzeigen eines Nachrichteninhalts der Interaktionsnachricht auf der zweiten Chatschnittstelle, wobei die Interaktionsnachricht und eine Chatnachricht auf verschiedene Weise angezeigt werden.

12. Verfahren nach Anspruch 10, wobei das Anzeigen einer Animation des Avatars des zweiten Benutzerkontos auf der zweiten Chatschnittstelle Folgendes umfasst:
Anzeigen der Animation des Avatars des zweiten Benutzerkontos in einem Avatarbereich, der einer Chatnachricht entspricht, die vom zweiten Benutzerkonto übertragen wurde und der Interaktionsnachricht am nächsten ist.

13. Verfahren nach einem der Ansprüche 10 bis 12, das ferner Folgendes umfasst:
Anzeigen von mindestens einer von n aufeinanderfolgenden Interaktionsnachrichten in kollabierter Form in Reaktion darauf, dass die n Interaktionsnachrichten auf der zweiten Chatschnittstelle existieren und die n Interaktionsnachrichten sich in einem Lesezustand befinden;
oder
Anzeigen von einer von m aufeinanderfolgenden Interaktionsnachrichten in kollabierter Form in Reaktion darauf, dass die m Interaktionsnachrichten auf der zweiten Chatschnittstelle existieren und die m Interaktionsnachrichten vor einer letzten Nicht-Interaktionsnachricht liegen.

14. Computervorrichtung, die einen Prozessor und einen Speicher umfasst, wobei im Speicher mindestens eine Anweisung, mindestens ein Programm, ein Codesatz oder ein Anweisungssatz gespeichert sind und die mindestens eine Anweisung, das mindestens eine Programm, der Codesatz oder der Anweisungssatz vom Prozessor geladen und ausgeführt wird, um alle Schritte des Nachrichtenübertragungsverfahrens nach einem der Ansprüche 1 bis 9 oder des Nachrichtenempfangsverfahrens nach einem der Ansprüche 10 bis 13 zu implementieren.

## Revendications

1. Procédé de transmission de messages, applicable à un premier client, le premier client étant connecté avec un premier compte utilisateur, le procédé comprenant les étapes suivantes :
afficher (302) une première interface de discussion, dans lequel des avatars d'au moins deux comptes utilisateurs sont affichés dans la première interface de discussion, et les au moins deux comptes utilisateurs comprennent le premier compte utilisateur et un deuxième compte utilisateur ;
générer (304) un message d'interaction en réponse à une interaction avec l'avatar du deuxième compte utilisateur ;
**caractérisé en ce que** le procédé comprend en outre les étapes suivantes :
transmettre (306) le message d'interaction au deuxième compte utilisateur, dans lequel le message d'interaction est configuré pour déclencher l'affichage d'une animation de l'avatar du deuxième compte utilisateur dans une deuxième interface de discussion par un deuxième client, et le deuxième client est connecté avec le deuxième compte utilisateur ; et
contrôler l'affichage de l'animation de l'avatar du deuxième compte utilisateur dans la première interface de discussion par un module d'affichage (1420), en réponse à l'interaction avec l'avatar du deuxième compte utilisateur.

2. Procédé selon la revendication 1, dans lequel la génération du message d'interaction en réponse à l'interaction avec l'avatar du deuxième compte utilisateur comprend ce qui suit :
générer le message d'interaction en réponse à une opération de double-clic sur l'avatar du deuxième compte utilisateur.

3. Procédé selon la revendication 1, dans lequel une pluralité d'avatars du deuxième compte utilisateur sont affichés dans la première interface de discussion, et l'affichage de l'animation de l'avatar du deuxième compte utilisateur dans la première interface de discussion en réponse à l'interaction avec l'avatar du deuxième compte utilisateur comprend ce qui suit :
afficher une animation d'au moins un de la pluralité d'avatars du deuxième compte utilisateur dans une zone d'avatar en réponse à une opération de double-clic sur l'avatar.

4. Procédé selon l'une des revendications 1 à 3, comprenant en outre l'étape suivante :
afficher le message d'interaction dans la première interface de discussion.

5. Procédé selon la revendication 4, dans lequel l'affichage du message d'interaction dans la première interface de discussion comprend ce qui suit :
afficher un contenu de message du message d'interaction dans la première interface de discussion, dans lequel le message d'interaction et un message de discussion sont affichés de différentes manières.

6. Procédé selon la revendication 5, dans lequel l'affichage d'un contenu de message du message d'interaction dans la première interface de discussion comprend ce qui suit :
lorsqu'un contenu affiché dans la première interface de discussion ne comprend pas un dernier message, défiler automatiquement jusqu'au dernier message dans la première interface de discussion, dans lequel le dernier message comprend le contenu de message du message d'interaction.

7. Procédé selon la revendication 5, dans lequel le contenu de message comprend un nom du premier compte utilisateur, un nom du deuxième compte utilisateur et une description d'une action réalisée sur le deuxième compte utilisateur par le premier compte utilisateur ;
dans lequel les noms comprennent au moins un parmi un nom de remarque, un surnom de groupe ou un surnom personnalisé.

8. Procédé selon la revendication 7, comprenant en outre les étapes suivantes :
afficher une page d'attribut du premier compte utilisateur en réponse à une première interaction avec le nom du premier compte utilisateur ;
ou
afficher une page d'attribut du deuxième compte utilisateur en réponse à une deuxième interaction avec le nom du deuxième compte utilisateur.

9. Procédé selon la revendication 5, comprenant en outre les étapes suivantes :
afficher au moins un parmi n messages d'interaction consécutifs sous une forme repliée lorsque les n messages d'interaction se trouvent dans la première interface de discussion et que les n messages d'interaction sont dans un état lu, n étant un nombre entier supérieur à 1 ;
ou
afficher au moins un parmi m messages d'interaction consécutifs sous une forme repliée lorsque les m messages d'interaction se trouvent dans la première interface de discussion et que les m messages d'interaction précèdent un dernier message de non-interaction, m étant un nombre entier supérieur à 1, et le message de non-interaction étant un message autre que les m messages d'interaction.

10. Procédé de réception de messages, applicable à un deuxième client, le deuxième client étant connecté avec un deuxième compte utilisateur, le procédé comprenant les étapes suivantes :
afficher (402) une deuxième interface de discussion, dans lequel les avatars d'au moins deux comptes utilisateurs sont affichés dans la deuxième interface de discussion, et les au moins deux comptes utilisateurs comprennent un premier compte utilisateur et le deuxième compte utilisateur ; **caractérisé en ce que** le procédé comprend en outre les étapes suivantes :
recevoir (404) un message d'interaction transmis par le premier compte utilisateur au deuxième compte utilisateur ;
afficher (406) le message d'interaction dans la deuxième interface de discussion, et afficher une animation de l'avatar du deuxième compte utilisateur dans la deuxième interface de discussion ; et
contrôler l'affichage de l'animation de l'avatar du deuxième compte utilisateur dans une première interface de discussion par un module d'affichage (1420), en réponse à l'interaction avec l'avatar du deuxième compte utilisateur par un premier client, et
le premier client étant connecté avec le premier compte utilisateur.

11. Procédé selon la revendication 10, dans lequel l'affichage du message d'interaction dans la deuxième interface de discussion comprend ce qui suit :
afficher un contenu de message du message d'interaction dans la deuxième interface de discussion, dans lequel le message d'interaction et un message de discussion sont affichés de différentes manières.

12. Procédé selon la revendication 10, dans lequel l'affichage d'une animation de l'avatar du deuxième compte utilisateur dans la deuxième interface de discussion comprend ce qui suit :
afficher l'animation de l'avatar du deuxième compte utilisateur dans une zone d'avatar correspondant à un message de discussion transmis par le deuxième compte utilisateur et étant le plus proche du message d'interaction.

13. Procédé selon l'une des revendications 10 à 12, comprenant en outre les étapes suivantes :
afficher au moins un parmi n messages d'interaction consécutifs sous une forme repliée lorsque les n messages d'interaction se trouvent dans la deuxième interface de discussion et que les n messages d'interaction sont dans un état lu ;
ou
afficher au moins un parmi m messages d'interaction consécutifs sous une forme repliée lorsque les m messages d'interaction se trouvent dans la deuxième interface de discussion et que les m messages d'interaction précèdent un dernier message de non-interaction.

14. Dispositif informatique comprenant un processeur et une mémoire, dans lequel la mémoire stocke au moins une instruction, au moins un programme, un jeu de codes ou un jeu d'instructions, et l'au moins une instruction, l'au moins un programme, le jeu de codes ou le jeu d'instructions sont chargés et exécutés par le processeur pour mettre en œuvre toutes les étapes du procédé de transmission de messages selon l'une des revendications 1 à 9 ou le procédé de réception de messages selon l'une des revendications 10 à 13.
